# EUROPÄISCHE PATENTSCHRIFT

(11) **EP 3 853 024 B1**
(45) Veröffentlichungstag und Bekanntmachung des Hinweises auf die Patenterteilung: **06.08.2025**
(21) Anmeldenummer: 19801297.3
(22) Anmeldetag: 07.11.2019
(51) Int. Cl.: B29C 64/153, B33Y 70/00, B33Y 10/00, B33Y 30/00, B33Y 80/00, C08J 3/20, C08K 3/04, C08K 3/22, C09D 177/02

(54) **POLYMERBASIERTES AUFBAUMATERIAL ZUM SELEKTIVEN SINTERN**
POLYMER-BASED BUILD MATERIAL FOR SELECTIVE SINTERING
MATÉRIAU CONSTITUTIF À BASE DE POLYMÈRE DESTINÉ AU FRITTAGE SÉLECTIF

(30) Priorität: 12.11.2018 DE 102018219302
(43) Veröffentlichungstag der Anmeldung: 28.07.2021
(73) Patentinhaber: EOS GmbH Electro Optical Systems, 82152 Krailling (DE)
(72) Erfinder: HOTTER, Andreas, 83022 Rosenheim (DE); PATERNOSTER, Stefan, 82346 Andechs (DE); PFISTERER, Heiko, 82275 Emmering (DE); GERG, Malin, 81377 München (DE); MATTES, Thomas, 82205 Gilching (DE); CHRIST, Marius, 81241 München (DE)
(74) Vertreter: Prüfer & Partner mbB Patentanwälte · Rechtsanwälte
(86) Internationale Anmeldenummer: PCT/EP2019/080552
(87) Internationale Veröffentlichungsnummer: WO 2020/099236

(56) Entgegenhaltungen:
- WO-A1-2005/085326
- WO-A1-2005/085326
- US-A1- 2008 122 141
- US-A1- 2008 122 141
- US-A1- 2018 155 559
- US-A1- 2018 155 559
- FERRO-PLAST S.R.L.: "CARBON BLACK IN POLVERE E PERLINE PER MATERIE PLASTICHE", 4 February 2020 (2020-02-04), Vimodrone, Italy, pages 1, XP055664888, Retrieved from the Internet <URL:https://www.ferroplast.com/pdf/TDS_Carbon_Black_List.pdf> [retrieved on 20200204]
- FERRO-PLAST S.R.L.: "CARBON BLACK IN POLVERE E PERLINE PER MATERIE PLASTICHE", 4 February 2020 (2020-02-04), Vimodrone, Italy, pages 1, XP055664888, Retrieved from the Internet <URL:https://www.ferroplast.com/pdf/TDS_Carbon_Black_List.pdf> [retrieved on 20200204]

## Beschreibung

Die vorliegende Erfindung bezieht sich auf ein Kunststoffpulver für die Verwendung in einem schichtweise arbeitenden Verfahren zur Herstellung von Formkörpern, bei dem selektiv Bereiche einer jeweiligen Pulverschicht geschmolzen und wieder verfestigt werden. Des Weiteren ist Gegenstand der vorliegenden Erfindung ein Verfahren zur Herstellung eines solchen Kunststoffpulvers, ein aus dem erfindungsgemäßen Pulver hergestelltes dreidimensionales Objekt, sowie ein Verfahren und ein System zur Herstellung von dreidimensionalen Objekten unter Verwendung des Kunststoffpulvers.

Wie beispielsweise aus der DE 44 10 046 bekannt ist, kann ein Verfahren zur Herstellung eines dreidimensionalen Objekts durch selektives Sintern mittels elektromagnetischer Strahlung mit Hilfe einer elektromagnetischen Strahlungsquelle schichtweise durchgeführt werden. In einem solchen Verfahren wird ein dreidimensionales Objekt schichtweise - nach dem Prinzip des "Additive Manufacturing" - durch wiederholtes Auftragen von Pulverschichten, selektives Aufschmelzen (teilweise oder vollständig) an den dem Querschnitt des Objekts entsprechenden Stellen und anschließendem Erstarren der Schmelze hergestellt. Durch das Aufschmelzen der Pulverschicht verbindet sich die Schmelze mit der zuvor aufgeschmolzenen Schicht.

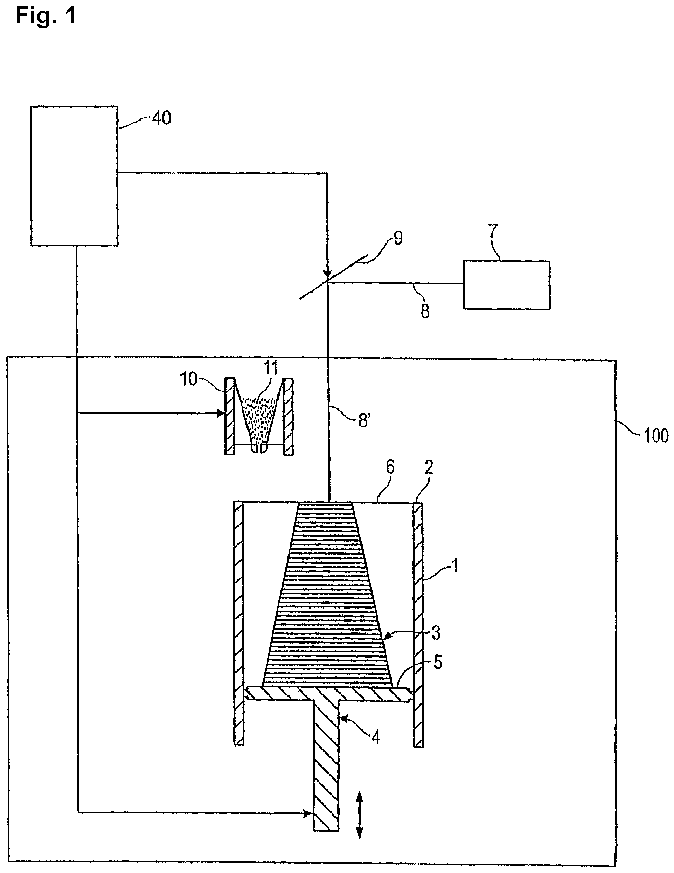

Fig. 1 zeigt beispielhaft eine Lasersintervorrichtung mit einem Laserstrahl und einem Ablenkspiegel, wie sie bei Verwendung eines CO₂-Lasers üblich ist, anhand derer ein Verfahren zur schichtweisen Herstellung eines dreidimensionalen Objektes durchgeführt werden kann. Wie aus Fig. 1 ersichtlich ist, weist die Vorrichtung einen Behälter 1 auf. Dieser ist nach oben offen und nach unten durch einen Träger 4 zum Tragen eines zu bildenden Objektes 3 begrenzt. Durch den oberen Rand 2 des Behälters (bzw. seiner Seitenwände) wird eine Arbeitsebene 6 definiert. Das Objekt befindet sich auf der Oberseite des Trägers 4 und wird aus einer Mehrzahl sich parallel zu der Oberseite des Trägers 4 erstreckender Schichten aus einem mittels elektromagnetischer Strahlung verfestigbaren, pulverförmigen Aufbaumaterial gebildet. Der Träger ist dabei über eine Höheneinstellvorrichtung in vertikaler Richtung, d.h. parallel zu der Seitenwand des Behälters 1 verschiebbar. Damit kann die Position des Trägers 4 relativ zur Arbeitsebene 6 eingestellt werden.

Oberhalb des Behälters 1 bzw. der Arbeitsebene 6 ist eine Aufbringvorrichtung 10 zum Aufbringen des zu verfestigenden Pulvermaterials 11 auf die Trägeroberfläche 5 oder eine zuletzt verfestigte Schicht vorgesehen. Weiterhin ist oberhalb der Arbeitsebene 6 eine Bestrahlungseinrichtung in Form eines Lasers 7 angeordnet, die einen gerichteten Lichtstrahl 8 abgibt. Dieser wird über eine Ablenkeinrichtung 9, beispielsweise einen Drehspiegel, als abgelenkter Strahl 8' in Richtung der Arbeitsebene 6 gelenkt. Diese Anordnung ist für ein Laser-Sinter-System mit einem CO₂-Laser üblich. Eine Steuereinheit 40 ermöglicht die Steuerung des Trägers 4, der Aufbringungsvorrichtung 10 und der Ablenkeinrichtung 9. Die Elemente 1 bis 6, 10 und 11 sind innerhalb des Maschinenrahmens 100 angeordnet.

Bei der Herstellung des dreidimensionalen Objektes 3 wird das Pulvermaterial 11 schichtweise auf den Träger 4 bzw. eine zuvor verfestigte Schicht aufgetragen und mit dem Laserstrahl 8' an den dem Objekt entsprechenden Stellen einer jeden Pulverschicht verfestigt. Der Träger wird nach jeder selektiven Verfestigung einer Schicht um die Dicke der als nächstes aufzutragenden Pulverschicht abgesenkt.

Verglichen mit dem oben beschriebenen System gibt es viele Modifikationen von Verfahren und Vorrichtungen zur Herstellung eines dreidimensionalen Objekts (Formkörpers) durch selektives Sintern mittels elektromagnetischer Strahlung, die ebenfalls verwendet werden können. Zum Beispiel könnten anstatt eines Lasers und/oder eines Lichtstrahls andere Systeme verwendet werden, um selektiv elektromagnetische Strahlung zu liefern, wie beispielsweise Masken-Belichtungssysteme oder dergleichen. Anstatt eines CO2-Lasers können ebenfalls Laserdioden, die bspw. zeilenförmig angeordnet sein können, verwendet werden.

Als Aufbaumaterial kommt häufig ein Pulver mit Pulverteilchen umfassend ein thermoplastisches Polymermaterial in Betracht. Die mechanischen Eigenschaften des hergestellten Objekts können durch geeignete Wahl des Polymers im Rohmaterial beeinflusst werden. So werden Polymere, die zu bevorzugten mechanischen Werkstoffeigenschaften im finalen Objekt führen, zum Beispiel in der DE 10 2008 024 281 A1 und DE 10 2008 024 288 A1 beschrieben. Ebenso wurde beschrieben, dass die mechanischen Eigenschaften durch Verwendung von Zusätzen wie Füllstoffe, Verstärkungsstoffe, Additive, z.B. Pigmente, weiter verbessert werden könnten. Beispielsweise könnten Kohlenstofffasern, Glasfasern, Aramidfasern, Carbon-Nanotubes, oder Zusätze, die ein geringes Aspektverhältnis (Glaskugeln, Aluminiumgries, etc.) oder mineralische Zusätze wie Titandioxid in das Polymer oder Copolymer-haltige Pulver eingearbeitet werden.

Ein möglicher Nachteil der bekannten nach dem oben beispielhaft beschriebenen Prinzip des "Additive Manufacturing" arbeitenden Sinterverfahren mittels CO₂-Laser stellt die mangelnde Flexibilität hinsichtlich des Lasers dar. Um Kunststoffpulver oder mit Kunststoff ummantelte Partikel versintern zu können, wird üblicherweise ein CO₂-Laser verwendet, der eine Wellenlänge von 10600 nm aufweist. Es muss ein aufwendiges Spiegelsystem verwendet werden, um den Laserstrahl über die Bauebene zu führen und der Laser muss permanent gekühlt werden. Die Verwendung von Lichtwellenleitern ist nicht möglich. Ebenso wenig ist es möglich, ohne zusätzliche Maßnahmen auf preiswertere Laser mit einer Wellenlänge im Mittel- oder Nahinfrarotbereich, im Bereich des sichtbaren Lichts oder des Ultraviolettbereichs auszuweichen, da derartige Laser Kunststoffe ohne geeignete Zusätze nicht oder nur in unzureichendem Maße schmelzen.

Dieses Problem wurde in der deutschen Patentanmeldung DE 10 2004 012 683 A1 wenigstens teilweise durch Zugabe von Absorbern zu polymerbasierten Pulvern gelöst. Die Absorber weisen ein Absorptionsspektrum auf, das die Wellenlänge im Mittel- oder Nahinfrarotbereich, im Bereich des sichtbaren Lichts oder des Ultraviolettbereichs absorbieren können. Durch Belichtung der Absorber kann die sich im Absorber entwickelte Hitze zum Schmelzen der polymerbasierten Partikel genutzt werden. Es ist jedoch bekannt, dass als Trockenmischung (Dry Blend) eingemischte Additive in Lasersinter-Pulver einen negativen Einfluss auf den Laser-Sinter-Prozess (Verkleinerung des Prozessfensters, schlechtere z-Anbindung der Schichten) haben können und somit zu schlechter Bauteilqualität führen können.

Nachteilig an der in der deutschen Patentanmeldung DE 10 2004 012 683 A1 vorgeschlagenen Lösung ist, dass der Prozess zur Instabilität neigt. Insbesondere weist der Prozess nur ein kleines Bau-/Temperaturfenster auf. Ein weiterer gravierender Nachteil ist, dass die so hergestellten Formkörper nur unzureichende mechanische Eigenschaften aufweisen.

Die WO 2005/085326 A1 offenbart, konkret im Beispiel 8, ein Kunststoffpulver zur Verwendung als Aufbaumaterial zum additiven Herstellen eines dreidimensionalen Objekts, wobei das Kunststoffpulver eine Trockenmischung von Polyamid 12-Pulver und Printex 60-Partikeln umfasst.

Die US 2008/122141 A1 offenbart, konkret in den Beispielen 3 und 4, ein Kunststoffpulver zur Verwendung als Aufbaumaterial zum additiven Herstellen eines dreidimensionalen Objekts, wobei als Kunststoffpulver eine Dry Blend-Mischung von Polyamid 12 bzw. Polyamid 6 und 12 mit Ruß vom Typ Raven 410 Ultra verwendet wird.

Aufgabe der vorliegenden Erfindung ist es, ein verbessertes Verfahren und/oder System zum Herstellen eines dreidimensionalen Objekts durch selektives Verfestigen des Aufbaumaterials an den dem Querschnitt des dreidimensionalen Objekts in der jeweiligen Schicht entsprechenden Stellen durch Einwirkung einer NIR-Strahlung bereitzustellen. Bevorzugt wird darauf abgezielt, dass das ein möglichst großes Bau- / Temperaturfenster und gute mechanische Eigenschaften aufweist, insbesondere im Hinblick auf Zugfestigkeit, E-Modul und Bruchdehnung. Ebenso ist es eine Aufgabe der Erfindung ein Pulver für die Verwendung als Aufbaumaterial in einem derartig verbesserten Verfahren sowie einen durch das vorteilhafte Verfahren hergestellten Formkörper bereitzustellen.

Diese Aufgabe wird gelöst durch ein Kunststoffpulver nach Anspruch 1, ein Herstellungsverfahren nach Anspruch 9, ein dreidimensionales Objekt nach Anspruch 12, ein Herstellungsverfahren nach Anspruch 13 und ein System nach Anspruch 14. Weiterbildungen der Erfindung sind in den Unteransprüchen festgelegt.

Gemäß einem ersten Aspekt der vorliegenden Erfindung weist das Kunststoffpulver eine Trockenmischung von polymerbasierten Partikeln und Partikeln eines NIR-Absorbers auf, wobei das Kunststoffpulver ferner Reflexionspartikel mit die NIR-Strahlung zumindest teilweise reflektierender Oberfläche umfasst, wobei der NIR-Absorber Ruß umfasst und wobei der Gewichtsanteil des NIR-Absorbers am Gesamtgewicht des Kunststoffpulvers im Bereich von mindestens 0,02 % und höchstens 0,45 % liegt. Bevorzugt liegt der Gewichtsanteil des Rußes am Gesamtgewicht von polymerbasierten Partikeln und Rußpartikeln bei mindestens 0,07 % und/oder höchstens 0,15 %, besonders bevorzugt bei mindestens 0,08 % und/oder höchstens 0,10 %. Das erfindungsgemäße Pulver soll insbesondere als Aufbaumaterial zum Herstellen eines dreidimensionalen Objekts durch selektives Verfestigen des Aufbaumaterials an den dem Querschnitt des dreidimensionalen Objekts in der jeweiligen Schicht entsprechenden Stellen durch Einwirkung einer NIR-Strahlung Verwendung finden.

Unter der Bezeichnung "Verfestigen" ist dabei ein zumindest teilweises An- oder Aufschmelzen mit anschließendem Erstarren bzw. Wiederverfestigen des Aufbaumaterials zu verstehen. Der Begriff "selektiv" bezeichnet in dem Kontext des Verfestigens ein örtlich begrenztes Bestrahlen an Stellen einer kontinuierlichen Schicht, die zu verfestigen sind, während Stellen der Schicht, die nicht zu verfestigen sind, nicht bestrahlt werden. Im Gegensatz zu einem derartigen selektiven Verfestigen steht z.B. eine Technik, bei der keine vollständige Schicht ausgebreitet wird, sondern das Aufbaumaterial nur an Stellen ausgebreitet wird, an denen eine Verfestigung gewünscht ist. Die Bestrahlung kann in diesem Fall auch an Stellen erfolgen, die nicht zu verfestigen sind.

Verfestigen kann demnach als schichtweises Aufschmelzen und anschließender Verfestigung des Aufbaumaterials durch Erstarren der Schmelze an den dem Querschnitt des dreidimensionalen Objekts in der jeweiligen Schicht entsprechenden Stellen durch Einwirkung von NIR-Strahlung verstanden werden.

Der Begriff " Nahinfrarot (NIR)-Strahlung" bezeichnet elektromagnetische Strahlung im Spektralbereich zwischen sichtbarem Licht und mittlerem Infrarot und insbesondere von 780 nm bis 3000 nm. Der Begriff "NIR-Absorber" kennzeichnet dementsprechend einen Stoff oder Stoffgemisch, der/das NIR-Strahlung zumindest teilweise absorbiert. Der Lesbarkeit wegen beziehen sich nachfolgende Ausführungen auf einen Stoff als NIR-Absorber. Entsprechendes gilt, wenn ein Stoffgemisch als NIR-Absorber verwendet wird. Erfindungsgemäß kann der NIR-Absorber Ruß enthalten oder er besteht aus Ruß, wobei bevorzugt ist, dass der NIR-Absorber Ruß ist und weitere NIR-Absorber nicht oder nur in geringem Maße vorhanden sind. Der Begriff "in geringem Maße" bedeutet, dass das Verhältnis der Absorption von Ruß zur Absorption der weiteren NIR-Absorber in zumindest einem Teil des NIR-Bereichs (bspw. bei 980 ± 7 nm) mindestens 2 oder 3, vorzugsweise mindestens 4 oder 5, weiter bevorzugt mindestens 6 oder 7 und insbesondere mindestens 8 oder 9 oder mindestens 10 beträgt.

Der Begriff "Trockenmischung" ist gleichbedeutend mit dem Begriff Dry Blend und bezeichnet erfindungsgemäß ein Gemisch der polymerbasierten Partikel und der Partikel des NIR-Absorbers. Optional kann die Trockenmischung zusätzlich ein oder mehrere weitere Additive umfassen, die optional im Dry Blend-Verfahren eingebracht werden.

Der Begriff "dreidimensionales Objekt" wird hier synonym für den Begriff "Formkörper" verwendet. Der Begriff "Polymerpartikel" wird hier synonym für den Begriff "polymerbasierte Partikel" verwendet und bezeichnet hier Partikel, die hier näher beschriebenes Polymer enthalten, vorzugsweise zu mindestens 20 Gew.-%, weiter bevorzugt zu mindestens Gew.-40 %, und insbesondere zu mindestens Gew.-60 % daraus bestehen. Die restlichen Bestandteile können im Wesentlichen Füllstoffe beinhalten.

Bevorzugt weist das Kunststoffpulver eine Trockenmischung von polymerbasierten Partikeln und Partikeln eines NIR-Absorbers auf, wobei der NIR-Absorber wiederum Ruß umfasst oder Ruß ist und wobei der Ruß einen Primärteilchendurchmesser im Bereich von 15 nm bis 70 nm, bevorzugt von mindestens 26 nm und/oder höchstens 58 nm und insbesondere von (42±16) nm aufweist.

Die mit dem erfindungsgemäßen Pulver hergestellten Formkörper weisen unerwartete Vorteile bei der Herstellung sowie in den hergestellten Formkörpern auf. Durch sorgfältige Auswahl des Konzentrationsbereichs des hier offenbarten spezifischen NIR-Absorbers wird erreicht, dass der Prozess stabil ist, und gleichzeitig, dass die mechanischen Eigenschaften, insbesondere im Hinblick auf Zugfestigkeit, E-Modul und Bruchdehnung des hergestellten Formkörpers sehr gut sind. Dabei zeigte sich, dass diese Vorteile signifikant nur durch die Kombination aus dem Ruß-enthaltenden bzw. aus Ruß bestehendem NIR-Absorber und dem Anteil des Rußes erreicht werden. Die von den Erfindern durchgeführten Versuche zeigen, dass bei niedrigeren Anteilen des Rußes die mechanischen Eigenschaften insbesondere in Bezug auf Zugfestigkeit, E-Modul und Bruchdehnung niedriger sind, andererseits bei höheren Anteilen der Prozess instabiler wird und damit die Produkteigenschaften verschlechtert (kleineres Temperaturfenster und kleinerer Verarbeitungsbereich). Mit dem speziell eingestellten Anteil des Rußes im Verhältnis zum polymerbasierten Material wurde somit unerwartet ein Ausgleich erreicht zwischen gegenläufigen Effekten bei additivierten Kunststoffpulvern.

Die bevorzugte Ausführungsform ist eine Trockenmischung von polymerbasierten Partikeln und der Partikel des NIR-Absorbers, d.h. die Partikel des NIR-Absorbers sind nicht, beispielsweise über eine Schmelze oder über gemeinsames Fällen aus einer Lösung oder auf andere Weise, in die polymerbasierten Partikel inkorporiert worden.

Die erfindungsgemäßen Vorteile und weitere bevorzugte Ausführungsformen werden nachfolgend verdeutlicht.

In einer bevorzugten Ausführungsform der Erfindung weist der Ruß eine Primärteilchendurchmesser im Bereich von 15 nm bis 70 nm, bevorzugt von mindestens 26 nm und/oder höchstens 58 nm, besonders bevorzugt ist der Ruß Industrieruß mit einer Partikelgröße von (42±16) nm Vorteilhafterweise verbessert sich durch diese Maßnahme nochmals die Prozessstabilität. Darüber hinaus können Verbesserungen in der Fluidisierbarkeit des Kunststoffpulvers und der Beschichtungsqualität sowie ein konstantes Beschichtungsverhalten erzielt werden. Als Beschichtungsqualität wird eine gleichmäßig dichte Beschichtung der Fläche ohne Bereiche mit sichtbar niedrigerer Schüttdichte bezeichnet, unabhängig davon, ob sich unter der beschichteten Pulverschicht Pulver oder ein vorher aufgeschmolzenes Baumaterial befindet. Als konstantes Beschichtungsverhalten wird ein stabiles Beschichtungsverhalten über die Dauer eines gesamten Baujobs über gegebenenfalls mehrere Stunden bezeichnet. Ein Baujob bezeichnet das Bauen eines Jobs, wobei ein Job die Zusammenstellung positionierter und parametrierter Bauteile in der Software ist.

Der Begriff "Primärteilchendurchmesser" bezieht sich in Abgrenzung von dem Durchmesser eines Agglomerates bzw. von Sekundärteilchen auf die Teilchengröße eines originären, nichtagglomerierten Teilchens. Das bedeutet, dass ein Agglomerat aus vielen Primärteilchen besteht, die die kleinste, nicht teilbare Einheit des Agglomerats darstellen. Ausgehend von Agglomeraten können Primärteilchen durch Behandlung einer Probe in einem Ultraschallbad erhalten werden. Der Primärteilchendurchmesser bezieht sich vorzugsweise auf den mittleren Durchmesser. Für die Zwecke der vorliegenden Erfindung ist der Primärteilchendurchmesser gemäß ASTM D3849 ermittelbar, insbesondere über morphologische Charakterisierung mittels Transmissionselektronenmikroskopie (TEM) gemäß ASTM D3849.

Überraschenderweise wurde im Rahmen der Erfindung gefunden, dass die genannten Verbesserungen mit dem Primärteilchendurchmesser in Beziehung stehen, im Wesentlichen unabhängig davon, in welchem Ausmaß bzw. zu welchen Grad die Primärteilchen des verwendeten Rußes im ursprünglichen Zustand oder beim Vorgang des Vermengens mit den polymeren Teilchen agglomeriert wurden.

Zum Zweck der Bestimmung der Primärteilchendurchmesser eignet sich beispielsweise ein LEO 912 Omega: 120 kV TEM-Gerät mit einer Proscan Slow Scan CCD 1024 x 1024 Pixel Kamera und einem 460 Mesh Kupfer Grid mit Kohlenstofffilm. Die Bildanalyse kann mittels Olympus Soft Imaging Solutions "analySIS" erfolgen. Zur Probenpräparation können 8 mg einer Probe in einem Milliliter Isopropanol 5 min im Ultraschallbad dispergiert werden. Hieraus können wenige Tropfen entnommen und nochmal in einem Milliliter Isopropanol 5 min im Ultraschallbad dispergiert werden. Anschließend kann ein Tropfen der Lösung auf ein Kupfergrid aufgetropft werden. Die mikroskopische Untersuchung kann bei verschiedenen Vergrößerungen durchgeführt werden. Vorzugsweise kann die Untersuchung bei einer Mikroskopvergrößerung von 2.000-fach (incl. Nachvergrößerung der Kamera beträgt die Vergrößerung 40.000 -fach) erfolgen. Optional kann eine Überprüfung der Kalibrierung mittels einem Line Grating Grid mit definiertem Linienabstand und/oder ein Qualifikationstest basierend auf der TEM Oberfläche vorgenommen werden.

In einer bevorzugten Ausführungsform der Erfindung ist der NIR-Absorber homogen in der Trockenmischung und/oder dem Kunststoffpulver verteilt. Zur Beurteilung der Homogenität eignet sich beispielsweise eine lichtmikroskopische Untersuchung. Für die Zwecke der vorliegenden Erfindung wird eine Verteilung insbesondere als "homogen" angesehen, wenn in einer Vielzahl (bspw. 2, 3, 4, 5, 6, usw.) von Stichproben die kleinste NIR-Absorber-Konzentration von der größten NIR-Absorber-Konzentration um weniger als 30 %, vorzugsweise weniger als 20 %, weiter bevorzugt weniger als 10 % abweicht. Vorzugsweise werden die Stichproben aus einer Mischung von mindestens 1 g, insbesondere mindestens 5 g entnommen. Dadurch wird vorteilhafterweise eine ortsabhängig unterschiedliche Absorption der NIR-Strahlung vermieden. Die Prozessstabilität erhöht sich und im Ergebnis ergibt sich ein Formkörper mit verbesserten mechanischen Eigenschaften.

Das erfindungsgemäße Pulver ist erhältlich, indem die polymerbasierten Partikel mit den Partikeln des NIR- Absorbers und ggf. weiteren Additiven in einem Mischschritt in dem entsprechenden Mischungsverhältnis vermengt werden, so dass der festgelegte Gewichtsanteil eingestellt ist. Der Mischvorgang erfolgt zweckmäßig in einem einstufigen Verfahren durch:
(i) Bereitstellen der polymerbasierten Partikeln und der Partikeln des NIR-Absorbers und
(ii) Trockenes Vermischen zumindest der polymerbasierten Partikeln und der Partikel des NIR-Absorbers.

Hierfür eignet sich beispielsweise ein Containermischer der Firma Mixaco CM150-D mit Standard-Flügelaufbau: 1 Bodenräumer und 1 Dispersionsflügel (Flügel mit einem Durchmesser von 400 mm), mit dem ein zweistufiges Mischen mit 2 min bei 516 U/min und 4 min bei 1000 U/min erfolgen kann.

Der Mischvorgang kann alternativ auch mit mehreren Mischschritten (mehrstufiges Verfahren) erfolgen:
(i) Bereitstellen einer ersten Trockenmischung (sog. Masterbatch) durch trockenes Vermischen von zumindest polymerbasierten Partikeln und Rußpartikeln mit einem ersten Anteil an Rußpartikeln,
(ii) Zugabe von weiteren polymerbasierten Partikeln zur ersten Trockenmischung, um eine zweite Trockenmischung mit einem zweiten, relativ zum ersten Anteil geringeren Anteil an Rußpartikeln zu erhalten,
(iii) gegebenenfalls weitere separate Zugabeschritte von jeweils weiteren polymerbasierten Partikeln zu der zweiten und gegebenenfalls weiteren Trockenmischung(en), um jeweils zunehmend weiter verringerte Anteile an Rußpartikeln zu erhalten. Optional kann die Trockenmischung in mindestens einer der Stufen (i) und (ii) und gegebenenfalls der optionalen Stufe (iii) und/oder nach Abschluss der Zugabeschritte mindestens einmal gesiebt werden, bevorzugt durch ein Sieb der Maschenweite 125 µm. Der Mischvorgang in einer Stufe oder in mehreren Stufen erfolgt mit der Maßgabe, dass nach Abschluss des Zugabeschritts (ii) bzw. der Zugabeschritte (iii) der Gewichtsanteil des Ruß am Gesamtgewicht von polymerbasierten Partikel und Rußpartikel im Bereich von mindestens 0,02 % und höchstens 0,45 %, bevorzugt bei mindestens 0,07 % und/oder höchstens 0,15 %, besonders bevorzugt bei mindestens 0,08 % und/oder höchstens 0,10 % liegt,

Erstaunlicherweise hat sich herausgestellt, dass die Homogenität bei dem einstufigen Verfahren besser ist als beim mehrstufigen Verfahren. Das einstufige Verfahren stellt demnach die bevorzugte Ausführungsform unter den beiden Möglichkeiten dar. Die Erfindung wendet sich also davon ab, das Kunststoffpulver mittels Masterbatch-Verfahrens bereitzustellen und vielmehr dazu hin, die gesamte Menge Kunststoffpulver in einem einzigen Prozessschritt, also in einem Single Batch Verfahren, bereitzustellen. Zu den Vorteilen des Single Batch Verfahrens zählen neben einer homogeneren Verteilung des NIR-Absorbers im Pulver insbesondere auch ein einfacherer und kosteneffizienterer Prozess, da nur ein Schritt erfolgen muss.

In einer bevorzugten Ausführungsform der Erfindung beträgt im CIE L*a*b*-Farbmodell der Helligkeitswert (L*-Wert) des Kunststoffpulvers, spektralphotometrisch gemessen, höchstens 75,00.

In einer bevorzugten Ausführungsform der Erfindung handelt es sich bei dem Ruß um Industrieruß. Industrieruß (englisch Carbon Black, EG-Nr. 215-609-9, CAS-Nummer 1333-86-4) ist gezielt als Industrie-Grundstoff hergestellter Ruß. Industrieruß ist zweckbedingt eine Modifikation des Kohlenstoffs mit hohem Oberfläche-zu-Volumen-Verhältnis und wird vor allem als Füllstoff und als Schwarzpigment verwendet. Vorzugsweise beträgt der C-Gehalt in quantitativer Elementaranalyse des Rußes, insbesondere des Industrierußes mindestens 96 %.

Alternativ oder zusätzlich weisen Mischungen aus Kunststoffpulver mit Industrieruß bei der Pulveranalyse mittels Rheometer bei Aeration 1,0 mm/s eine Leistungsaufnahme kleiner als 200 mJ, vorzugsweise kleiner als 170 mJ, insbesondere kleiner als 140 mJ auf. Durch diese Eigenschaft(en) ergibt sich eine gegenüber anderen Rußtypen nochmals deutlich verbesserte Prozessstabilität.

Die Bestimmung der Leistungsaufnahme erfolgt vorzugsweise gemäß Norm ASTM D 7891. Hierfür kann beispielsweise das Rheometer Freeman FT4 Powder Rheometer (Hersteller: Freeman Technology; Software: Bezeichnung C740) verwendet werden. Dabei wird durch den Boden eines zylinderförmigen Gefäßes Luft eingeblasen. In das Gefäß wird Pulver gefüllt und es wird die Leistungsaufnahme eines Rührers gemessen. Die Leistungsaufnahme des Rührers wird bei einer Luftgeschwindigkeit ("Aeration") von 1,0 mm/s als Kriterium verwendet. Das Gefäß hat die folgenden Abmessungen: 50 mm x 260 ml (z.B. Split Vessel, No. 8329, Bezeichnung C2001). Als Rührwerkzeug wird eines mit 48 mm Durchmesser verwendet (z.B. Blade Assembly, Bezeichnung C211). Die Einfüllmenge in das zylinderförmige Gefäß beträgt 160 ml. Die maximale Schergeschwindigkeit ("tip speed") beträgt bei dem verwendeten Rührwerkzeug (Durchmesser 48 mm) 20 mm/s. Die Aeration wird in fünf Stufen von 0.0 bis 2.0 mm/s bei einem helikalen Winkel von 5° und einer Schergeschwindigkeit von 20 mm/s durchgeführt.

Grundsätzlich ist die vorliegende Erfindung nicht auf bestimmte polymerbasierte Kunststoffe beschränkt. Geeignete Polymerbasis können aus der aus Homopolymeren, Copolymeren und Polyblends (auch bekannt als Polymer-Blends) bestehenden Gruppe ausgewählt werden. Unter einem Polyblend (auch als "Polymerblend" bezeichnet) wird eine Mischung aus zwei oder mehreren unterschiedlichen Polymeren verstanden. Bei einem Polyblend kann es sich um ein einphasiges Polyblend (homogenes Polyblend) oder mehrphasiges Polyblend (heterogenes Polyblend) handeln. Bei einem mehrphasigen Polyblend werden mittels dynamischer Differenzkalorimetrie typischerweise mehrere Glasübergänge beobachtet. Ferner können bei einem mehrphasigen Polyblend mittels dynamischer Differenzkalorimetrie mehrere Schmelzpeaks entsprechend den Schmelzpunkten der einzelnen Phasen beobachtet werden.

Das Polymer kann aus Polyaryletherketon (PAEK), Polyarylethersulfon (PAES), Polyamiden, Polyestern, Polyethern, Polylactiden (PLA), Polyolefinen, Polystyrolen, Polyphenylensulfiden, Polyvinylidenfluoriden, Polyphenylenoxiden, Polyimiden, Polyetherimiden, Polycarbonaten, und Copolymeren, die mindestens eines der vorangehenden Polymere bzw. deren Monomereinheiten einschließen, sowie Polymerblends einer oder mehrerer der genannten Polymere oder Copolymere davon, ausgewählt werden, wobei die Auswahl jedoch nicht auf die oben genannten Polymere sowie Copolymere und Polymerblends davon beschränkt ist. Der Begriff "Polymere" kann auch Oligomere mit zyklischer oder ringförmiger molekularer Struktur umfassen. Ein Beispiel für ein derartiges Oligomer stellt CBT (cyclic butylen terephtalate) zur Herstellung von PBT (Polybutylenterephtalat) dar.

Geeignete PAEK-Polymere und -Copolymere beispielsweise werden aus der aus Polyetheretherketon (PEEK), Polyetherketonketon (PEKK), Polyetherketon (PEK), Polyetheretherketonketon (PEEKK), Polyetherketonetherketonketon (PEKEKK), Polyaryletheretheretherketon (PEEEK) und Copolymeren, die mindestens eines der vorgenannten Polymere einschließen, bestehenden Gruppe ausgewählt.

Geeignete Polyamid-Polymere oder -Copolymere können aus der Gruppe ausgewählt werden, die aus Polamid 6/6T, Polyamidelastomeren wie Polyetherblockamide wie z.B. PEBAX^{™}-basierte Materialien, Polyamid 6, Polyamid 66, Polyamid 11, Polyamid 12, Polyamid 612, Polyamid 610, Polyamid 1010, Polyamid 1012, Polyamid1212, Polyamid PA6T/66, PA4T/46 und Copolymeren, die mindestens eines der vorgenannten Polymere einschließen besteht. Geeignete Polyesterpolymere oder Copolymere können aus der aus Polyalkylenterephthalaten (z.B. PET, PBT) und deren Copolymeren ausgewählt werden.

Geeignete Polyolefinpolymere oder -Copolymere können aus der aus Polyethylen und Polypropylen bestehenden Gruppe ausgewählt werden. Geeignete Polystyrolpolymere oder Copolymere können aus der aus syndiotaktischen und isotaktischen Polystyrolen bestehenden Gruppe ausgewählt werden. Geeignete Polyimidpolymere oder -Copolymere können aus der aus Polyarylamid, Polybismaleinimid und insbesondere Polyetherimid bestehenden Gruppe ausgewählt werden.

Im Rahmen der Erfindung sind Polyamid-Polymere oder -Copolymere bevorzugt, insbesondere Polyamid 12, Polyamid 11 und/oder Polyamid 1012 und/oder ein Copolymer, das mindestens eines der vorangehenden Polymere bzw. deren Monomereinheiten einschließt, und/oder zumindest einem Polymerblend, das zumindest eines der genannten Polymere oder Copolymere umfasst.

In einer Ausführungsform der Erfindung umfassen die polymerbasierten Partikel als Polymermaterial Polymere oder Copolymere oder Blends von PAEK, Polyamid oder Polyetherimid, wobei das PAEK bevorzugt PEEK, PEKK, PEK, PEEKK, PEKEKK und/oder PEEEK ist und das bevorzugte Polyamid Polyamid 12 und/oder Polyamid 11 ist. Ferner genügen die aus diesen Polymermaterialien gefertigten Formkörper den hohen Anforderungen, die bezüglich der mechanischen Beanspruchung gestellt werden.

Die vorliegende Erfindung eignet sich auch für den Einsatz von Polyblends.

Hinsichtlich der Korngröße der polymerbasierten Partikel gibt es keine über die auf dem Gebiet des Lasersinterns üblichen hinausgehenden Einschränkungen. Geeignete mittlere Korngrößen d₅₀ liegen bei mindestens 10 µm, bevorzugt mindestens 20 µm, besonders bevorzugt mindestens 30 µm und/oder höchstens 150 µm, bevorzugt höchstens 100 oder 90, besonders bevorzugt höchstens 80 µm, insbesondere bei mindestens 40 und/oder höchstens 70 µm. Die Bestimmung der mittlere Korngröße d₅₀ erfolgt vorzugsweise gemäß ISO 13320-1 (naß). Als Gerät kann beispielsweise ein CILAS 1064 eingesetzt werden.

Im Rahmen der vorliegenden Erfindung können grundsätzlich weitere geeignete Additive der Trockenmischung hinzugefügt werden, um dem Kunststoffpulver oder dem daraus hergestellten Formkörper vorteilhafte Eigenschaften zu verleihen, oder um bestimmte vorteilhafte Eigenschaften solcher Additive im Herstellungsverfahren zu nutzen. Um die Vorteile der vorliegenden Erfindung weitestgehend nutzen zu können, ist es jedoch bevorzugt, dass die Trockenmischung mindestens ein oder mehrere Additive aufweist, die (im eingesetzten Gewichtsanteil und der eingesetzten Partikelgröße) höchstens 70, 60 oder 50 %, vorzugsweise höchstens 40, 30 oder 20 % und insbesondere höchstens 15, 10 oder 5 % der NIR-Strahlung reflektiert. Dadurch wird erreicht, dass die NIR-Strahlung im Kunststoffpulver dem NIR-Absorber zur Hitzeentwicklung zur Verfügung steht und nicht ungenutzt reflektiert wird. Da Diodenlaser deutlich weniger Energie als Standard-Laser liefern, kann auf diese Weise das Pulver überhaupt erst verarbeitet werden und die Energieeinsparung vorteilhaft genutzt werden.

Das Kunststoffpulver umfasst Reflexionspartikel mit die NIR-Strahlung zumindest teilweise reflektierender Oberfläche. Durch diese Maßnahme können einerseits die mit bestimmten im IR-Bereich reflektierenden Stoffe verbundenen Vorteile und gleichzeitig die mit der vorliegenden Erfindung verbundenen Effekte ausgenutzt werden.

Das als Weißpigment bekannte Titandioxid wirkt beispielsweise als ein solches Reflexionspartikel. Die Verwendung von Titandioxid weist insbesondere im Zusammenhang der vorliegenden Erfindung unerwartete Vorteile auf. Dies wird nachfolgend beschrieben.

Wie eingangs beschrieben, sieht die vorliegende Erfindung die Verwendung NIR-Absorbers auf, um die Absorption im NIR-Wellenlängenbereich (bspw. <1 µm) zu erhöhen. Die Erfinder fanden heraus, dass Ruß ein sehr hohes Absorptionsvermögen und die Fähigkeit aufweist, die absorbierte Energie effizient in Wärme umzuwandeln. Im Falle eines universell einsetzbaren Materials sollte die Rußmenge möglichst gering sein, damit ein möglichst helles Bauteil erzeugt werden kann. Dadurch eignet sich das Bauteil besser für ein nachträgliches Färben vor allem mit hellen Farben.

Bei Kunststoffen werden naturbelassene Produkte mit bräunlich gebrochenem Weiß als naturfarben bezeichnet. Bei Verwendung von naturfarbenen Kunststoffen in einer Mischung mit Ruß stellten die Erfinder fest, dass sich bei den daraus hergestellten Bauteilen ein inhomogener Farbeindruck ergibt. Die Bauteile wirken "fleckig".

Überraschend wurde festgestellt, dass Bauteile mit wesentlich homogenerem Farbeindruck erzeugt werden können, wenn dem naturfarbenen Kunststoff zuvor TiO₂ eingemischt wurde. Durch den Zusatz von Titandioxid können demnach auch bei der Verwendung von geringen Mengen an Ruß Bauteile mit einer homogenen Farbe erzielt werden. Demnach umfassen die Reflexionspartikel bevorzugt TiO₂. Vorzugsweise sind die Reflexionspartikel im Wesentlichen aus TiO₂ gebildet.

Vorzugsweise liegt der Gewichtsanteil der Reflexionspartikel am Gesamtgewicht des Kunststoffpulvers zwischen 0,5 % und 15,0 %, bevorzugt bei mindestens 0,5 % und/oder höchstens 5 %, insbesondere bei mindestens 0,5 % und/oder höchstens 2 % .

Ein weiterer Aspekt der vorliegenden Erfindung ist ein Verfahren zur Herstellung des erfindungsgemäßen Kunststoffpulvers. Die Herstellung umfasst zumindest die folgenden Schritte:
(i) Bereitstellen der polymerbasierten Partikel und der Partikeln des NIR-Absorbers und ggf. weiteren Additiven und
(ii) Trockenes Vermischen zumindest der polymerbasierten Partikeln und der Partikel des NIR-Absorbers und ggf. der weiteren Additive.

Optional kann nach Schritt (ii) ein Verpacken des Kunststoffpulvers, vorzugsweise unter Ausschluss von Feuchtigkeit, erfolgen.

In einer bevorzugten Ausführungsform werden die polymerbasierten Partikel mit den Partikeln des NIR- Absorbers und ggf. weiteren Additiven in einem einstufigen Verfahren in dem gewünschten Mischungsverhältnis vermischt, so dass der festgelegte Gewichtsanteil eingestellt ist. Der Mischvorgang kann jedoch auch wie oben beschrieben mit mehreren Mischschritten (mehrstufiges Verfahren) erfolgen. Wie ebenfalls oben ausgeführt, ist die Homogenität beim einstufigen Verfahren besser als beim mehrstufigen Verfahren.

Die polymerbasierten Partikel können gemeinsam mit den Reflexionspartikeln, welche bevorzugt TiO₂ umfassen, vorgehalten und mit den Partikeln des NIR-Absorbers trocken vermischt werden.

Herkömmlichen Pulvern werden typischerweise eine Rieselhilfe wie z.B. pyrogene Kieselsäure beigemischt. Überraschend hat sich herausgestellt, dass der Ruß als Rieselhilfe wirkt. Da der Ruß als Rieselhilfe wirkt, ist ein Zusatz einer speziellen Rieselhilfe zum beanspruchten Pulver nicht nötig. Demnach wird dem Kunststoffpulver in einer Ausführungsform kein zusätzliches Rieselhilfsmittel (d.h. nur Ruß wirkt als Rieselhilfe) hinzugefügt.

Ein weiterer Aspekt der vorliegenden Erfindung ist ein Formkörper bzw. ein dreidimensionales Objekt, welches durch selektives Verfestigen eines pulverförmigen Aufbaumaterials an den dem Querschnitt des dreidimensionalen Objekts in der jeweiligen Schicht entsprechenden Stellen durch Einwirkung von Strahlung, bevorzugt durch Einwirkung von NIR-Strahlung hergestellt wurde. Als Aufbaumaterial diente dabei ein erfindungsgemäßes Kunststoffpulver.

NIR-Strahlung ist nicht zwingend notwendig, jedoch bevorzugt. Das Pulver lässt sich grundsätzlich auch durch andere Schichtbauverfahren verarbeiten und bietet hier unerwartet die gleichen Vorteile.

Durch Verwendung des erfindungsgemäßen Kunststoffpulvers als Aufbaumaterial ergeben sich zusätzlich zu den vorgenannten Vorteilen nachfolgende Effekte, die gleichsam eine bevorzugte Ausführungsform der Erfindung darstellen. Demnach weist in einer bevorzugten Ausführungsform der Formkörper mindestens eine und bevorzugt eine Kombination von zwei oder allen nachfolgend definierten Eigenschaften gemäß EN ISO 527 auf:
(i) Zugfestigkeit mindestens 40 MPa, vorzugsweise mindestens 48 MPa;
(ii) E-Modul mindestens 1600 MPa; vorzugsweise mindestens 1700 MPa;
(iii) Bruchdehnung mindestens 2,5 %; vorzugsweise mindestens 3,0 %.

Diese Werte gelten insbesondere für dreidimensionale Objekte aus Polyamid 12, die mit zeilenförmig angeordneten Laserdioden erzeugt wurden.

Ein weiterer Aspekt der vorliegenden Erfindung ist ein Verfahren zur Herstellung eines Formkörpers durch selektives Verfestigen eines pulverförmigen Aufbaumaterials an den dem Querschnitt des dreidimensionalen Objekts in der jeweiligen Schicht entsprechenden Stellen durch Einwirkung von Strahlung, vorzugsweise von NIR-Strahlung. Erfindungsgemäß wird als Aufbaumaterial das oben beschriebene Kunststoffpulver verwendet. Dieses kann durch Einwirkung von elektromagnetischer Strahlung, bspw. spezifisch in einer im NIR gelegenen Wellenlänge oder Wellenlängenbereich, insbesondere bei 980±10 nm und/oder 940±10 nm und/oder 810±10 nm und/oder 640±10 nm, zumindest teilweise an- oder aufgeschmolzen und anschließend wieder verfestigt werden.

Um das Verfahren wirtschaftlicher und/oder umweltverträglicher zu gestalten, kann ein Teil des in einem vorangegangenen Herstellungszyklus übriggebliebenen, unverfestigten Aufbaumaterials ("Gebrauchtpulver") in einem nachfolgenden Zyklus wiederverwendet werden. Dazu wird das Gebrauchtpulver mit Neupulver in einem vorbestimmten Verhältnis miteinander gemischt. In einer bevorzugten Ausführungsform weist das Aufbaumaterial also einen Anteil Gebrauchtpulver, welches zuvor beim Herstellen eines Formkörpers als unverfestigtes Aufbaumaterial übriggeblieben ist, und einen Anteil Neupulver, das zuvor noch nicht beim Herstellen eines Objekts verwendet worden ist, auf. Vorzugsweise beträgt der Anteil an Neupulver höchstens 70 Gewichtsprozent, insbesondere höchstens 60, 50 oder gar 40 Gewichtsprozent.

Ein weiterer Aspekt der vorliegenden Erfindung stellt ein System dar, welches zur Herstellung von dreidimensionalen Objekten durch selektives Verfestigen des erfindungsgemäßen pulverförmigen Aufbaumaterials an den dem Querschnitt des dreidimensionalen Objekts in der jeweiligen Schicht entsprechenden Stellen durch Einwirkung von Strahlung, bevorzugt von NIR-Strahlung dient. Erfindungsgemäß weist das System mindestens eine Strahlungsquelle, die ausgebildet ist, um elektromagnetische Strahlung, insbesondere spezifisch in einer im NIR gelegenen Wellenlänge oder Wellenlängenbereich, zu emittieren, eine Prozesskammer, die als offener Behälter mit einer Behälterwandung ausgeführt ist, einen in der Prozesskammer befindlichen Träger, wobei Prozesskammer und Träger gegeneinander in vertikaler Richtung beweglich sind, einen Vorratsbehälter und einen in horizontaler Richtung bewegbaren Beschichter auf. Der Vorratsbehälter ist zumindest teilweise mit dem erfindungsgemäßen Kunststoffpulver als Aufbaumaterial befüllt.

Zum schichtweisen Aufschmelzen des erfindungsgemäßen Kunststoffpulvers werden passende Verfahrens- bzw. Systemparameter ausgewählt. Neben dem einzustellenden Anteil des NIR-Absorbers werden insbesondere die Schichtdicke, die Laserleistung und die Belichtungsgeschwindigkeit gezielt ausgewählt.

In einer bevorzugten Ausführungsform der Erfindung wird die elektromagnetische Strahlung spezifisch im NIR-Bereich innerhalb eines Fensters von nicht mehr als 50 nm (λ2 - λ1 ≤ 50 nm), vorzugsweise nicht mehr als 40 nm, weiter bevorzugt nicht mehr als 30 nm und insbesondere nicht mehr als 20 nm emittiert. Dadurch ist es möglich, dass das erfindungsgemäße Kunststoffpulver weitere Stoffe umfassen kann, die aufgrund ihres Absorptions- oder Reflexionsvermögens in einem ersten Teilbereich des NIR-Bereichs stören würden. Durch Wahl eines relativ engen Wellenbereichs außerhalb des ersten Teilbereichs kann der störende Einfluss verringert oder verhindert werden.

In einer bevorzugten Ausführungsform der Erfindung emittiert die Strahlungsquelle elektromagnetische Strahlung spezifisch bei einer oder mehreren Wellenlängen im Bereich von 500-1500 nm, insbesondere bei einer oder mehreren der nachfolgenden Wellenlängen: 980±10 nm und/oder 940±10 nm und/oder 810±10 nm und/oder 640±10 nm. Bevorzugt emittiert die Strahlungsquelle bei 980±7 nm.

In einer bevorzugten Ausführungsform der Erfindung umfasst die Strahlungsquelle mindestens einen Laser, vorzugsweise eine oder mehrere Laserdioden. Die Laserdioden können dabei zeilenförmig oder versetzt angeordnet sein. Ebenso ist es möglich, die Laserdioden in einem 2-dimensionalen Array anzuordnen. Es kann sich um einen Kantenemitter handeln. Vorzugsweise handelt es sich um einen Oberflächenemitter (VCSEL oder Philips-VCSEL). Durch eine Zeilenbelichtung lassen sich hohe Baugeschwindigkeiten erzielen. Zudem ermöglicht die Verwendung von Laserdioden einen hohen Wirkungsgrad und senkt die Energiekosten.

Geeignete Laserdioden arbeiten üblicherweise mit einer Leistung zwischen 0,1 und 500 Watt, bevorzugt mit mindestens 1,0 Watt und/oder höchstens 100 Watt. Der Fokus des Laserstrahls kann einen Radius zwischen 0,05 mm und 1 mm, bevorzugt von mindestens 0,1 mm und/oder höchstens 0,4 mm haben. Die Belichtungsgeschwindigkeit, d.h. die Geschwindigkeit des Laserfokus relativ zur Bauebene, beträgt üblicherweise zwischen 10 mm/s und 10000 mm/s, bevorzugt mindestens 300 mm/s und/oder höchstens 5000 mm/s.

Im Rahmen der vorliegenden Erfindung haben die Begriffe "umfassend" oder "enthaltend" sowie deren grammatikalischen Abwandlungen nachfolgende Bedeutungen: In einer Ausführungsform können neben den genannten Elementen weitere Elemente enthalten sein. In einer anderen Ausführungsform sind im Wesentlichen nur die genannten Elemente enthalten. Mit anderen Worten können die Begriffe neben ihrer herkömmlichen Bedeutung in einer besonderen Ausführungsform gleichbedeutend mit dem Begriff "im Wesentlichen bestehend aus" oder "bestehend aus" sein.
Fig. 1 zeigt beispielhaft eine herkömmliche Lasersintervorrichtung zur schichtweisen Herstellung eines dreidimensionalen Objektes.
Fig. 2 zeigt ein erfindungsgemäßes dreidimensionales Objekt (rechtes Bauteil) im Vergleich zu einem dreidimensionalen Objekt gemäß einer bevorzugten Ausführungsform der Erfindung (linkes Bauteil). Das Kunststoffpulver, aus dem das linke Bauteil gebaut wurde, enthielt Titandioxid.
Fig. 3 zeigt eine lichtmikroskopische Vergrößerung der Bauteiloberfläche der Bauteile aus Fig. 2. A: linkes Bauteil von Fig. 2; B: rechtes Bauteil von Fig. 2.

Nachfolgende Methoden sind zur Ermittlung bestimmter Eigenschaften der erfindungsgemäßen Gegenstände grundsätzlich geeignet und wurden in den weiter unten beschriebenen Experimenten angewendet. Sie stellen bevorzugte Methoden zur Charakterisierung bestimmter Eigenschaften der erfindungsgemäßen Gegenstände dar.

Die Bestimmung der Zugfestigkeit, E-Modul und Bruchdehnung erfolgte gemäß EN ISO 527. Dabei wurden Probekörper vom Typ 1BB verwendet. Der Konditionierungszustand hat relevante Einflüsse auf die Messergebnisse der mechanischen Eigenschaften wie Zugfestigkeit, E-Modul und Bruchdehnung. Die mechanischen Eigenschaften der Probekörper wurden in trockenem Zustand ermittelt, wobei die Prüfung maximal 3 Stunden nach dem Entpacken der Bauteile stattfand. Als bevorzugtes Prüfklima für die Ermittlung der mechanischen Eigenschaften wird gemäß ISO 291 eine Temperatur von (23±2) °C und eine relative Luftfeuchte von (50±10) % angewandt. Dieses Prüfklima sollte bei der Ermittlung der mechanischen Eigenschaften eingehalten werden. Gemäß EN ISO 527-1 sollen die Prüfgeschwindigkeiten zwischen den interessierten Parteien vereinbart werden. Es wurde eine Prüfgeschwindigkeit von 50 mm/s verwendet.

Die Bestimmung der Prozesssicherheit erfolgte nach den folgenden Kriterien:
- Eine Fluidisierbarkeit des erfindungsgemäßen Pulvers ist in der Beschichtungseinheit notwendig, damit ausreichend Pulver auf das gesamte Baufeld aufgetragen werden kann.
- Eine gleichmäßig dichte Beschichtung der Fläche ohne Bereiche mit sichtbar niedrigerer Schüttdichte, unabhängig davon, ob sich unter der beschichteten Pulverschicht Pulver oder ein vorher aufgeschmolzenes Baumaterial befindet.
- Stabiles Beschichtungsverhalten über die Dauer eines gesamten Baujobs über mehrere Stunden. Ein Baujob bezeichnet das Bauen eines Jobs, wobei ein Job die Zusammenstellung positionierter und parametrierter Bauteile in der Software ist.
- Ein ausreichend großes Temperaturfenster um Inhomogenität der Temperaturverteilung im Baufeld zu tolerieren.

Die nachfolgenden Referenzbeispiele und Beispiele dienen zur Veranschaulichung und sind nicht als einschränkend zu verstehen. Sie definieren weitere bevorzugte Ausführungsformen der Erfindung.

### Beispiele

### Referenzbeispiel 1: Mechanische Eigenschaften in Abhängigkeit der Konzentration an Ruß

In diesem Versuch wurden die mechanischen Eigenschaften von Probekörpern untersucht, deren Aufbaumaterial, d.h. Kunststoffpulver, sich in dem Gewichtsanteil des Rußes am Gesamtgewicht der Mischung aus Ruß und polymerbasiertem Material unterscheiden. Als Ruß diente in diesem Referenzbeispiel Monarch^{®} 570. Das polymerbasierte Material war PA 2201 der EOS GmbH.

Hierzu wurden zunächst homogen Mischungen durch physikalisches Vermengen von polymerbasieren Partikeln und Rußpartikeln in dem in der Tabelle 1 angegebenen Mischungsverhältnis hergestellt und anschließend als Aufbaumaterial in einem selektiven Lasersinterprozess auf zwei verschiedenen Testständen verwendet.

In einem hier nicht näher beschriebenen Versuch wurde bestätigt, dass sich das erfindungsgemäße Aufbaumaterial grundsätzlich auf einer herkömmlichen mit einer CO₂-Laserquelle versehenen Lasersintermaschine wie beispielsweise einer EOS P 396 der Fa. EOS Electro Optical Systems mit den vom Hersteller beschriebenen Standardeinstellungen verwenden lässt. Im vorliegenden Versuch wurde anstelle eines CO₂-Lasers eine Lichtquelle verwendet, die NIR-Laserdioden umfassen. Für weitere Details zur Hardware und geeigneten Einstellungen wird auf die Europäische Patentanmeldung EP14824420.5, veröffentlicht als EP 3 079 912, verwiesen. Anschließend wurden die mechanischen Eigenschaften entsprechend den beschriebenen Verfahren bestimmt.

Die mechanischen Eigenschaften wurden wie nachfolgend beschrieben bestimmt. Die Prüfmethode und die Bauteilabmessungen der Probekörper werden in der Norm EN ISO 527 für den Zugversuch festgelegt. Hierzu eignet sich die Material-Prüfmaschine TC-FR005TN.A50, Dossier Nr.:605922 der Firma Zwick mit der Software TestExpert II V3.6. Im standardisierten Zugversuch wurden Prüfergebnisse wie Elastizitätsmodul [MPa] und Zugfestigkeit [MPa] ermittelt.

Die Ergebnisse sind in der nachfolgenden Tabelle 1 dargestellt.

**Tab. 1: Bestimmung der mechanischen Eigenschaften:**

| Konzentration Ruß [Gew.-%] | Zugfestigkeit [MPa] (Aufbaurichtung ZYX gemäß ISO ASTM 52921) | E-Modul [MPa] (Aufbaurichtung ZYX gemäß ISO ASTM 52921) | Bruchdehnung [%] (Aufbaurichtung ZYX gemäß ISO ASTM 52921) |
|---|---|---|---|
| 0,030 | 23,0 | 1100 | 2,3 |
| 0,050 | 38,3 | 1724 | 3,04 |
| 0,060 | 41,4 | 1743 | 3,23 |
| 0,075 | 46,7 | 1892 | 3,45 |
| 0,090 | 49,1 | 1659 | 4,21 |

In Versuchsreihen hat sich gezeigt, dass die Verwendung einer Mischung von einer Trockenmischung mit circa 0,04 bis 0,45 Gew.-% Ruß überraschend bessere Gesamtergebnisse liefert im Vergleich zu Mischungen mit anderen Rußanteilen.

Bei niedrigeren Konzentrationen sind die mechanischen Eigenschaften (Zugfestigkeit, E-Modul, Bruchdehnung) niedriger, bei höheren Konzentrationen wird der Prozess unstabiler (kleineres Temperaturfenster/ kleinerer Verarbeitungsbereich).

### Referenzbeispiel 2: Verbesserung der mechanischen Eigenschaften im Vergleich zu Mischungen, die mit einem mehrstufigen Mischverfahren hergestellt wurden

In diesem Versuch wurden die mechanischen Eigenschaften eines erfindungsgemäßen Formkörpers mit einem Formkörper verglichen, zu dessen Herstellung eine Mischung von 75 Gew.-% "PA 2200" und 25 Gew.% "PA 2202 black" verwendet wurde, zwei kommerziell erhältliche Aufbaumaterialien, die auf dem Polymertyp PA 12 basieren, wobei PA 2202 black Ruß enthält. Im erfindungsgemäßen Aufbaumaterial war 0,09 Gew.-% Ruß (hier Monarch^{®} 570) gemischt mit Kunststoffpartikeln (hier Polyamid vom Typ PA 12 mit dem Handelsnamen PA 2201 der EOS GmbH) enthalten.

Die Probekörper wurden entsprechend Referenzbeispiel 1 hergestellt und untersucht. Die Ergebnisse sind in der nachfolgenden Tab. 2 dargestellt.

**Tab. 2: Vergleich der mechanischen Eigenschaften eines erfindungsgemäßen Formkörpers und einem aus einem mehrstufig gemischten Aufbaumaterial hergestellten Formkörpers.**

| Testmaterial | Zugfestigkeit [MPa] (Aufbaurichtung XZY gemäß ISO ASTM 52921) | E-Modul [MPa] (Aufbaurichtung XZY gemäß ISO ASTM 52921) | Bruchdehnung [%] (Aufbaurichtung XZY gemäß ISO ASTM 52921) |
|---|---|---|---|
| PA 2201 + Monarch^{®} 570 | 48,76 | 1731 | 15,02 |
| PA 2200 + PA 2202 black | 47,18 | 1604 | 12,72 |

| Testmaterial | Zugfestigkeit [MPa] (Aufbaurichtung ZYX gemäß ISO ASTM 52921) | E-Modul [MPa] (Aufbaurichtung ZYX gemäß ISO ASTM 52921) | Bruchdehnung [%] (Aufbaurichtung ZYX gemäß ISO ASTM 52921) |
|---|---|---|---|
| PA 2201 + Monarch^{®} 570 | 46,38 | 1726 | 5,47 |
| PA 2200 + PA 2202 black | 39,31 | 1665 | 3,21 |

In den Versuchsreihen hat sich gezeigt, dass die Verwendung einer Mischung von PA mit Monarch^{®} 570 wesentlich prozesssicherer ist und zu verbesserten mechanischen Eigenschaften führt als die Verwendung einer Mischung aus PA 2200 und PA 2202 black.

### Referenzbeispiel 3: Prozesssicherheit in Abhängigkeit der Primärteilchendurchmesser von Ruß

Es wurden Mischungen aus polymerbasiertem Pulver und verschiedenen Rußtypen hergestellt. Der Anteil der Rußtypen am Gesamtgewicht der Mischung betrug jeweils 0,09 Gewichtsprozent. Die polymerbasierten Partikel waren bei allen Mischungen identisch und waren in diesem Fall aus Polyamid 12 mit dem Handelsnamen PA 2201 der EOS GmbH. Als Rußtypen wurden verschiedene kommerzielle Produkte verwendet, die Industrieruß enthielten. Diese unterschieden sich u.a. in den folgenden Eigenschaften: Primärpartikelgröße, BET-Oberfläche gemäß EN ISO 60, Ölabsorptionszahl, pH-Wert, Herstellart und Aschegehalt.

Die Mischungen wurden homogen vermischt und als Aufbaumaterial in einem Lasersinterprozess verwendet. Die Prozesssicherheit wurde bestimmt und die Ergebnisse in der nachfolgenden Tab. 4 dargestellt.

**Tab. 3: Sicherheit des Lasersinterprozesses bei Verarbeitung von Mischungen aus polymerbasiertem Pulver und verschiedenen Rußtypen.**

| Handelsname Ruß | Primärteilchendurchmesser [nm] (Herstellerangaben, nicht gemäß Norm ermittelt ermittelt.) | Prozesssicherheit | Mittlerer Primärteilchendurchme sser (Messwerte gemäß ASTM D3849) |
|---|---|---|---|
| Monarch^{®} 570 | 21 | sehr gut | (46±12) nm |
| | | +++ | (44±14) nm |
| Mogul L | 24 | sehr gut | |
| | | +++ | |
| Spezialschwarz 4 | 25 | sehr gut | (42±13) nm |
| | | +++ | (37±10) nm |
| Printex^{®} XE-2B | 30 | sehr gut | |
| | | +++ | |
| Printex^{®} 200 | 47 | gut | |
| | | ++ | |
| Printex^{®} G | 51 | schlecht | |
| | | -- | |
| Flammruß 101 | 95 | schlecht | |
| | | -- | |
| Arosperse 15 | 280 | sehr schlecht | |
| | | --- | |

Gegenüber anderen Rußtypen, welche sich signifikant von der Partikelgröße von ca. 15 bis 50 nm unterscheiden, zeigt sich eine deutlich verbesserte Prozessstabilität, die sich insbesondere auszeichnete durch bessere Fluidisierbarkeit des Kunststoffpulvers, konstantes Beschichtungsverhalten und bessere Beschichtungsqualität.

### Referenzbeispiel 4: Mechanische Eigenschaften in Abhängigkeit des verwendeten Rußtyps

In diesem Versuch wurden die mechanischen Eigenschaften von Probekörpern untersucht, die entsprechend Referenzbeispiel 1 hergestellt wurden. Die mechanischen Eigenschaften wurden wie im Referenzbeispiel 1 beschrieben bestimmt. Die Ergebnisse sind in der nachfolgenden Tabellen 4 und 5 dargestellt.

**Tab. 4: Bestimmung der mechanischen Eigenschaften in XZY-Richtung von aus Mischungen aus PA 2201 der EOS GmbH und verschiedenen Rußtypen hergestellten Formkörpern.**

| Handelsname Ruß | Zugfestigkeit [MPa] (Aufbaurichtung XZY gemäß ISO ASTM 52921) | E-Modul [MPa] (Aufbaurichtung XZY gemäß ISO ASTM 52921) | Bruchdehnung [%] (Aufbaurichtung XZY gemäß ISO ASTM 52921) |
|---|---|---|---|
| Monarch^{®} 570 | 48,76 | 1731 | 15,02 |
| Mogul L | 46,60 | 1614 | 17,19 |
| Spezialschwarz 4 | 48,06 | 1652 | 12,68 |

**Tab. 5: Bestimmung der mechanischen Eigenschaften in ZYX-Richtung von aus Mischungen aus PA 2201 und verschiedenen Rußtypen hergestellten Formkörpern.**

| Handelsname Ruß | Zugfestigkeit [MPa] (Aufbaurichtung ZYX gemäß ISO ASTM 52921) | E-Modul [MPa] (Aufbaurichtung ZYX gemäß ISO ASTM 52921) | Bruchdehnung [%] (Aufbaurichtung ZYX gemäß ISO ASTM 52921) |
|---|---|---|---|
| Monarch^{®} 570 | 46,38 | 1726 | 5,47 |
| Mogul L | 41,58 | 1722 | 4,24 |
| Spezialschwarz 4 | 47,01 | 1847 | 5,18 |

In den Versuchsreihen hat sich gezeigt, dass bei den Mischungen mit höchster Prozesssicherheit die Verwendung einer Mischung von PA 2201 mit Monarch^{®} 570 bei gleicher Konzentration zu einer noch besseren Bauteilqualität (mechanische Eigenschaften: Zugfestigkeit, E-Modul, Bruchdehnung) führt als die Verwendung anderer Rußtypen. Bauteile aus Mischungen mit Spezialschwarz 4 waren hinsichtlich der mechanischen Eigenschaften (Zugfestigkeit, E-Modul, Bruchdehnung) ebenfalls gut, wiesen allerdings schlechtere Oberflächen auf.

Die Ermittlung der Primärteilchendurchmesser gemäß TEM-Untersuchung nach ASTM D3849 ergab (46±12) nm und (44±14) nm für Monarch^{®} 570 bzw. (42±13) nm, (37±10) nm für Spezialschwarz 4.

### Beispiel 5: TiO₂-additivierte Kunststoffpartikel in einem Dry Blend mit Ruß

In diesem Versuch wurden die optische Beschaffenheit von Probekörpern verglichen, die beide aus demselben Kunststoffpulver (VESTOSINT^{®} 1125 weiß) hergestellt wurden, die Kunststoffpulver sich jedoch darin unterschieden, dass das eine Titandioxid enthielt (VESTOSINT^{®} 1125 weiß), während das andere frei von Titandioxid war (PA 2201). Es wird vermutet, dass der Titandioxid-Gehalt bei etwa 1 Gew.-% liegt.

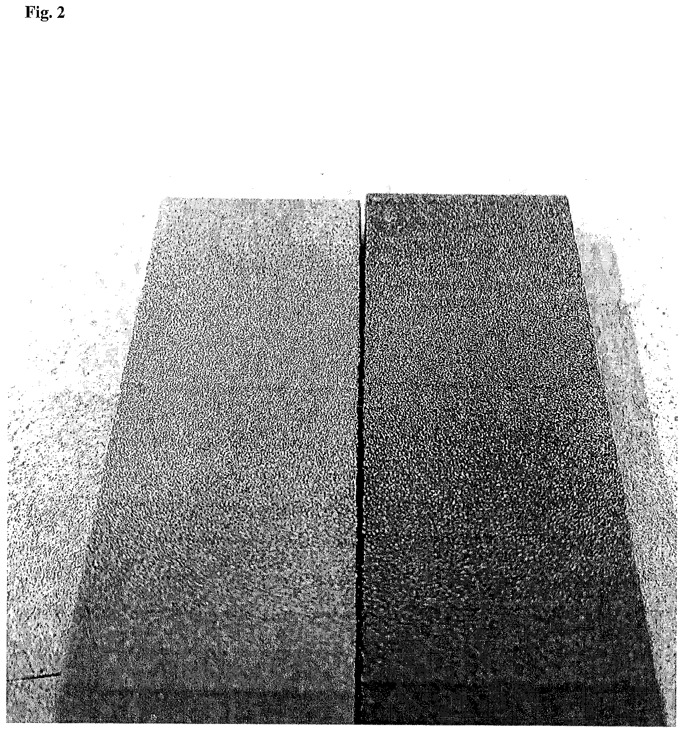

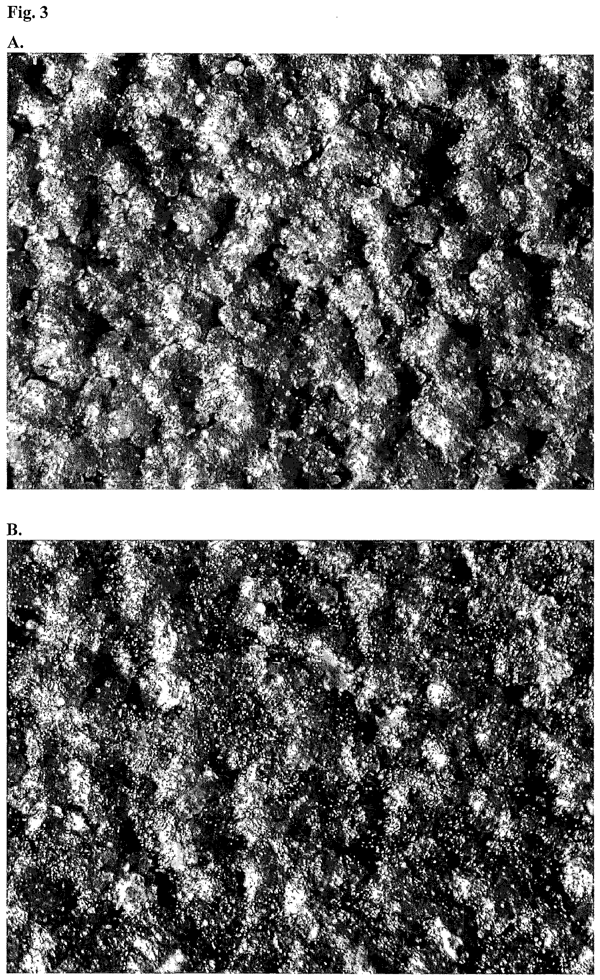

Die Ergebnisse sind in Fig. 2 und 3 dargestellt.

In Fig. 2 und 3 ist zu sehen, dass sich bei Verwendung des naturfarbenen Kunststoffes PA 2201 (d.h. ohne Titandioxid) in einer Mischung mit Ruß bei den daraus gedruckten Bauteilen ein inhomogener Farbeindruck ergibt. Die Bauteile wirken "fleckig" (Fig. 2, Bauteil rechts; Fig. 3B). Bei Versuchen mit VESTOSINT^{®} 1125 weiss hingegen, welches das Weißpigment TiO₂ enthält, konnten Bauteile mit ebenmäßiger Optik, einem extrem homogenen Farbton und farblicher Einheitlichkeit hergestellt werden (Fig. 2, Bauteil links, Fig. 3A).

## Patentansprüche

1. Kunststoffpulver zur Verwendung als Aufbaumaterial zum additiven Herstellen eines dreidimensionalen Objekts durch selektives Verfestigen des Aufbaumaterials an den dem Querschnitt des dreidimensionalen Objekts in der jeweiligen Schicht entsprechenden Stellen durch Einwirkung einer NIR-Strahlung,
wobei das Kunststoffpulver eine Trockenmischung von polymerbasierten Partikeln und Partikeln eines NIR-Absorbers umfasst, wobei das Kunststoffpulver ferner Reflexionspartikel mit die NIR-Strahlung zumindest teilweise reflektierender Oberfläche umfasst,
wobei der NIR-Absorber Ruß umfasst und
wobei der Gewichtsanteil des NIR-Absorbers am Gesamtgewicht des Kunststoffpulvers im Bereich von 0,02 % bis 0,45 % liegt.

2. Kunststoffpulver nach Anspruch 1, wobei der Gewichtsanteil des NIR-Absorbers am Gesamtgewicht des Kunststoffpulvers bei mindestens 0,07 % und/oder höchstens 0,15 %, bevorzugt bei mindestens 0,08 % und/oder höchstens 0,10 % liegt.

3. Kunststoffpulver, insbesondere Kunststoffpulver nach Anspruch 1 oder 2,
wobei das Kunststoffpulver eine Trockenmischung von polymerbasierten Partikeln und Partikeln eines NIR-Absorbers aufweist und der NIR-Absorber Ruß umfasst, wobei der Ruß einen mittleren Primärteilchendurchmesser im Bereich von 15 nm bis 70 nm, bevorzugt von mindestens 26 nm und/oder höchstens 58 nm aufweist.

4. Kunststoffpulver nach einem der vorangehenden Ansprüche,
wobei im CIE L*a*b*-Farbmodell der Helligkeitswert (L*-Wert) des Kunststoffpulvers, spektralphotometrisch gemessen, höchstens 75,00 beträgt.

5. Kunststoffpulver nach einem der vorangehenden Ansprüche,
wobei die Reflexionspartikel TiO₂ umfassen, und
wobei der Gewichtsanteil der Reflexionspartikel am Gesamtgewicht des Kunststoffpulvers zwischen 0,5 % und 15 % liegt.

6. Kunststoffpulver nach einem der vorangehenden Ansprüche,
wobei der Ruß mindestens eine, bevorzugt beide der folgenden Eigenschaften aufweist:
(i) es ist amorpher Industrieruß (Definition gemäß EG-Nr. 215-609-9, CAS-No. 1333-86-4);
(ii) in quantitativer Elementaranalyse beträgt der C-Gehalt mehr als 96 %.

7. Kunststoffpulver nach einem der vorangehenden Ansprüche,
wobei bei der Pulveranalyse des Kunststoffpulvers mittels Rheometer bei Aeration 1,0 mm/s die Leistungsaufnahme höchstens 200 mJ, vorzugsweise höchstens 170 mJ, insbesondere höchstens 140 mJ beträgt.

8. Kunststoffpulver nach einem der vorangehenden Ansprüche,
wobei die polymerbasierten Partikel als Polymermaterial zumindest ein Polymer umfassen, das ausgewählt ist aus zumindest einem Polyaryletherketon (PAEK), Polyarylethersulfon (PAES), Polyamid, Polyester, Polyether, Polylactid, Polyolefin, Polystyrol, Polyphenylensulfid, Polyvinylidenfluoride, Polyphenylenoxid, Polyimid, Polyetherimid, Polycarbonat, bevorzugt aus Polyamid, weiter bevorzugt aus Polyamid 12, Polyamid 11 und/oder Polyamid 1012 und/oder zumindest einem Copolymer, das mindestens eines der vorangehenden Polymere bzw. deren Monomereinheiten einschließt, und/oder zumindest einem Polymerblend, das zumindest eines der genannten Polymere oder Copolymere umfasst.

9. Herstellung eines Kunststoffpulvers nach einem der Ansprüche 1 bis 8, wobei die Herstellung zumindest die folgenden Schritte umfasst:
(i) Bereitstellen der polymerbasierten Partikel und der Partikel des NIR-Absorbers
(ii) Trockenes Vermischen zumindest der polymerbasierten Partikel und der Partikel des NIR-Absorbers,
wobei die polymerbasierten Partikel gemeinsam mit den Reflexionspartikeln vorgehalten werden und mit den Partikeln des NIR-Absorbers trocken vermischt werden

10. Herstellung eines Kunststoffpulvers gemäß Anspruch 9
wobei das Vermischen der polymerbasierten Partikel und der Partikel des NIR-Absorbers in einem Prozessschritt erfolgt.

11. Herstellung eines Kunststoffpulvers gemäß einem der Ansprüche 9 bis 11, wobei das Kunststoffpulver ohne zusätzliche Rieselhilfsmittel bereitgestellt wird.

12. Dreidimensionales Objekt, welches durch selektives Verfestigen eines pulverförmigen Aufbaumaterials an den dem Querschnitt des dreidimensionalen Objekts in der jeweiligen Schicht entsprechenden Stellen durch Einwirkung von Strahlung, insbesondere durch Einwirkung von NIR-Strahlung hergestellt wurde,
wobei als Aufbaumaterial ein Kunststoffpulver nach einem der vorhergehenden Ansprüche 1 bis 8 verwendet wurde.

13. Verfahren zur Herstellung eines dreidimensionalen Objekts durch selektives Verfestigen eines pulverförmigen Aufbaumaterials an den dem Querschnitt des dreidimensionalen Objekts in der jeweiligen Schicht entsprechenden Stellen durch Einwirkung von NIR-Strahlung,
wobei als Aufbaumaterial ein Kunststoffpulver nach einem der Ansprüche 1 bis 8 verwendet wird und
wobei das Aufbaumaterial durch Einwirkung von elektromagnetischer Strahlung, die durch eine Strahlungsquelle emittiert wird, selektiv verfestigt wird.

14. System zur Herstellung von dreidimensionalen Objekten durch selektives Verfestigen eines pulverförmigen Aufbaumaterials an den dem Querschnitt des dreidimensionalen Objekts in der jeweiligen Schicht entsprechenden Stellen durch Einwirkung von NIR-Strahlung, wobei das System
mindestens eine Strahlungsquelle, die ausgebildet ist, um elektromagnetische Strahlung spezifisch in einer im NIR gelegenen Wellenlänge oder Wellenlängenbereich zu emittieren, eine Prozesskammer, die als offener Behälter mit einer Behälterwandung ausgeführt ist,
einen in der Prozesskammer befindlichen Träger, wobei Prozesskammer und Träger gegeneinander in vertikaler Richtung beweglich sind,
einen Vorratsbehälter und einen in horizontaler Richtung bewegbaren Beschichter aufweist,
wobei der Vorratsbehälter zumindest teilweise mit einem Kunststoffpulver nach einem der Ansprüche 1 bis 8 als Aufbaumaterial gefüllt ist.

15. Verfahren nach Anspruch 13 oder System nach Anspruch 14,
wobei die elektromagnetische Strahlung spezifisch im NIR-Bereich innerhalb eines Fensters von höchstens 50 nm, vorzugsweise höchstens 40 nm, weiter bevorzugt höchstens 30 nm und insbesondere höchstens 20 nm emittiert wird,
wobei vorzugsweise die Strahlungsquelle elektromagnetische Strahlung im Bereich von 500 nm bis 1500 nm, insbesondere bei mindestens einer der Wellenlängen 980±7 nm und/oder 940±7 nm und/oder 810±7 nm und/oder 640±7 nm emittiert.

16. Verfahren nach Anspruch 15 oder System nach Anspruch 14, wobei die Strahlungsquelle mindestens einen Laser, vorzugsweise mindestens einen Laserdioden umfasst.

## Claims

1. A plastic powder for use as a build material for additively manufacturing a three-dimensional object by selectively solidifying the build material at the locations corresponding to the cross-section of the three-dimensional object in the respective layer by exposure to NIR radiation,
wherein the plastic powder comprises a dry mixture of polymer-based particles and particles of an NIR absorber, wherein the plastic powder further comprises reflection particles having a surface at least partially reflecting the NIR radiation,
wherein the NIR absorber comprises carbon black, and
wherein the proportion by weight of the NIR absorber in the total weight of the plastic powder is in the range from 0.02% to 0.45%.

2. The plastic powder according to claim 1, wherein the proportion by weight of the NIR absorber in the total weight of the plastic powder is at least 0.07% and/or at most 0.15%, preferably at least 0.08% and/or at most 0.10%.

3. The plastic powder, in particular the plastic powder according to claim 1 or 2,
wherein the plastic powder comprises a dry mixture of polymer-based particles and particles of an NIR absorber, and the NIR absorber comprises carbon black,
wherein the carbon black has an average primary particle diameter in the range from 15 nm to 70 nm, preferably of at least 26 nm and/or at most 58 nm.

4. The plastic powder according to any one of the preceding claims,
wherein, in the CIE L*a*b* color model, the brightness value (L* value) of the plastic powder, measured spectrophotometrically, is at most 75.00.

5. The plastic powder according to any one of the preceding claims,
wherein the reflection particles comprise TiO₂, and
wherein the proportion by weight of the reflection particles in the total weight of the plastic powder is between 0.5% and 15%.

6. The plastic powder according to any one of the preceding claims,
wherein the carbon black has at least one, preferably both, of the following properties:
(i) it is amorphous industrial carbon black (definition according to EC No. 215-609-9, CAS No. 1333-86-4);
(ii) in quantitative elemental analysis, the C content is more than 96%.

7. The plastic powder according to any one of the preceding claims,
wherein, in the powder analysis of the plastic powder by means of a rheometer at aeration 1.0 mm/s, the power consumption is at most 200 mJ, preferably at most 170 mJ, in particular at most 140 mJ.

8. The plastic powder according to any one of the preceding claims,
wherein the polymer-based particles comprise, as polymer material, at least one polymer which is selected from at least one polyaryletherketone (PAEK), polyarylethersulfone (PAES), polyamide, polyester, polyether, polylactide, polyolefin, polystyrene, polyphenylene sulfide, polyvinylidene fluorides, polyphenylene oxide, polyimide, polyetherimide, polycarbonate, preferably from polyamide, more preferably from polyamide 12, polyamide 11 and/or polyamide 1012, and/or at least one copolymer which includes at least one of the preceding polymers or the monomer units thereof, and/or at least one polymer blend which comprises at least one of said polymers or copolymers.

9. Manufacturing of a plastic powder according to any one of claims 1 to 8, wherein the production comprises at least the following steps:
(i) providing the polymer-based particles and the particles of the NIR absorber,
(ii) dry mixing at least the polymer-based particles and the particles of the NIR absorber,
wherein the polymer-based particles are provided together with the reflection particles and are dry-mixed with the particles of the NIR absorber,

10. Manufacturing of a plastic powder according to claim 9,
wherein the mixing of the polymer-based particles and the particles of the NIR absorber takes place in one process step.

11. Manufacturing of a plastic powder according to any one of claims 9 to 11, wherein the plastic powder is provided without additional flow aids.

12. A three-dimensional object which was manufactured by selectively solidifying a powder-form build material at the locations corresponding to the cross-section of the three-dimensional object in the respective layer by exposure to radiation, in particular by exposure to NIR radiation,
wherein a plastic powder according to any one of the preceding claims 1 to 8 was used as the build material.

13. A method for manufacturing a three-dimensional object by selectively solidifying a powder-form build material at the locations corresponding to the cross-section of the three-dimensional object in the respective layer by exposure to NIR radiation, wherein a plastic powder according to any one of claims 1 to 8 is used as the build material, and
wherein the build material is selectively solidified by exposure to electromagnetic radiation emitted by a radiation source.

14. A system for manufacturing three-dimensional objects by selectively solidifying a powder-form build material at the locations corresponding to the cross-section of the three-dimensional object in the respective layer by exposure to NIR radiation, wherein the system comprises
at least one radiation source which is configured to emit electromagnetic radiation specifically in a wavelength or wavelength range located in NIR,
a carrier located in the process chamber, wherein the process chamber and the carrier are movable relative to one another in the vertical direction,
a storage container and a coater which is movable in the horizontal direction,
wherein the storage container is at least partially filled with a plastic powder according to any one of claims 1 to 8 as the build material.

15. The method according to claim 13 or the system according to claim 14,
wherein the electromagnetic radiation is emitted specifically in the NIR range within a window of at most 50 nm, preferably at most 40 nm, further preferably at most 30 nm and in particular at most 20 nm,
wherein preferably the radiation source emits electromagnetic radiation in the range from 500 nm to 1500 nm, in particular at at least one of the wavelengths 980±7 nm and/or 940±7 nm and/or 810±7 nm and/or 640±7 nm.

16. The method according to claim 15 or the system according to claim 14,
wherein the radiation source comprises at least one laser, preferably at least one laser diode.

## Revendications

1. Poudre plastique destinée à être utilisée comme matériau constitutif pour la fabrication additive d'un objet tridimensionnel par solidification sélective du matériau constitutif aux emplacements correspondant à la section transversale de l'objet tridimensionnel dans la couche respective par exposition à un rayonnement NIR,
où la poudre plastique comprend un mélange sec de particules à base de polymère et de particules d'un absorbeur NIR, la poudre plastique comprenant en outre des particules réfléchissantes ayant une surface réfléchissant au moins partiellement le rayonnement NIR,
où l'absorbeur NIR comprend du noir de carbone et
où la proportion pondérale de l'absorbeur NIR par rapport au poids total de la poudre plastique se situe dans la plage de 0,02 % à 0,45 %.

2. Poudre plastique selon la revendication 1, où la proportion pondérale de l'absorbeur NIR par rapport au poids total de la poudre plastique se situe d'au moins 0,07 % et/ou d'au plus à 0,15 %, de préférence d'au moins 0,08 % et/ou d'au plus 0,10 %.

3. Poudre plastique, en particulier poudre plastique selon la revendication 1 ou 2,
où la poudre plastique comprend un mélange sec de particules à base de polymère et de particules d'un absorbeur NIR et où l'absorbeur NIR comprend du noir de carbone, où le noir de carbone a un diamètre moyen de particules primaires dans la plage de 15 nm à 70 nm, de préférence d'au moins 26 nm et/ou d'au plus de 58 nm.

4. Poudre plastique selon l'une des revendications précédentes,
où, dans le modèle de couleur CIE L*a*b*, la valeur de luminosité (valeur L*) de la poudre plastique, mesurée par spectrophotométrie, est d'au plus 75,00.

5. Poudre plastique selon l'une des revendications précédentes,
où les particules réfléchissantes comprennent du TiO₂, et
où la proportion pondérale des particules réfléchissantes par rapport au poids total de la poudre plastique se situe entre 0,5 % et 15 %.

6. Poudre plastique selon l'une des revendications précédentes,
où le noir de carbone présente au moins une, de préférence les deux propriétés suivantes :
(i) il s'agit de noir de carbone industriel amorphe (définition selon le n° CE 215-609-9, n° CAS 1333-86-4) ;
(ii) en analyse quantitative élémentaire, la teneur en C est supérieure à 96 %.

7. Poudre plastique selon l'une des revendications précédentes,
où, lors de l'analyse de poudre de la poudre plastique au moyen d'un rhéomètre à une aération de 1,0 mm/s, la puissance absorbée est d'au plus 200 mJ, de préférence d'au plus 170 mJ, en particulier d'au plus 140 mJ.

8. Poudre plastique selon l'une des revendications précédentes,
où les particules à base de polymère comprennent, en tant que matériau polymère, au moins un polymère qui est choisi parmi au moins un polyaryléthercétone (PAEK), une polyaryléthersulfone (PAES), un polyamide, un polyester, un polyéther, un polylactide, une polyoléfine, un polystyrène, un sulfure de polyphénylène, des fluorures de polyvinylidène, un oxyde de polyphénylène, un polyimide, un polyétherimide, un polycarbonate, de préférence en polyamide, plus préférablement en polyamide 12, polyamide 11 et/ou polyamide 1012 et/ou au moins un copolymère qui comprend au moins l'un des polymères précédents ou leurs unités monomères, et/ou au moins un mélange de polymères qui comprend au moins l'un des polymères ou copolymères mentionnés.

9. Fabrication d'une poudre plastique selon l'une des revendications 1 à 8, où la préparation comprend au moins les étapes suivantes :
(i) préparation des particules à base de polymère et des particules de l'absorbeur NIR
(ii) mélange à sec au moins des particules à base de polymère et des particules de l'absorbeur NIR,
où les particules à base de polymère sont mises à disposition conjointement avec les particules réfléchissantes et mélangées à sec avec les particules de l'absorbeur NIR

10. Fabrication d'une poudre plastique selon la revendication 9,
où le mélange des particules à base de polymère et des particules de l'absorbeur NIR a lieu dans une étape de procédé.

11. Fabrication d'une poudre plastique selon l'une des revendications 9 à 11, où la poudre plastique est mise à disposition sans adjuvant d'écoulement supplémentaire.

12. Objet tridimensionnel, qui a été fabriqué par solidification sélective d'un matériau constitutif pulvérulent aux emplacements correspondant à la section transversale de l'objet tridimensionnel dans la couche respective par exposition à un rayonnement, en particulier par exposition à un rayonnement NIR,
où une poudre plastique selon l'une des revendications précédentes 1 à 8 a été utilisée comme matériau constitutif.

13. Procédé de fabrication d'un objet tridimensionnel par solidification sélective d'un matériau constitutif pulvérulent aux emplacements correspondant à la section transversale de l'objet tridimensionnel dans la couche respective par exposition à un rayonnement NIR,
où une poudre plastique selon l'une des revendications 1 à 8 est utilisée comme matériau constitutif, et
où le matériau constitutif est solidifié de manière sélective par exposition à un rayonnement électromagnétique qui est émis par une source de rayonnement.

14. Système de fabrication d'objets tridimensionnels par solidification sélective d'un matériau constitutif pulvérulent aux emplacements correspondant à la section transversale de l'objet tridimensionnel dans la couche respective par exposition à un rayonnement NIR, où le système comprend
au moins une source de rayonnement, qui est conçue pour émettre un rayonnement électromagnétique spécifiquement dans une longueur d'onde ou une plage de longueurs d'onde située dans le NIR,
un support se trouvant dans la chambre de traitement, où la chambre de traitement et le support sont mobiles l'un par rapport à l'autre dans la direction verticale,
un réservoir et un dispositif d'enduction mobile dans la direction horizontale,
où le réservoir est rempli au moins partiellement d'une poudre plastique selon l'une des revendications 1 à 8 comme matériau constitutif.

15. Procédé selon la revendication 13 ou système selon la revendication 14,
où le rayonnement électromagnétique est émis spécifiquement dans la plage NIR à l'intérieur d'une fenêtre d'au plus 50 nm, de préférence d'au plus 40 nm, plus préférablement d'au plus 30 nm et en particulier d'au plus 20 nm,
où de préférence la source de rayonnement émet un rayonnement électromagnétique dans la plage de 500 nm à 1500 nm, en particulier à au moins une des longueurs d'onde 980 ± 7 nm et/ou 940 ± 7 nm et/ou 810 ± 7 nm et/ou 640 ± 7 nm.

16. Procédé selon la revendication 15 ou système selon la revendication 14,
où la source de rayonnement comprend au moins un laser, de préférence au moins une diode laser.
